# EUROPEAN PATENT APPLICATION

(11) **EP 4 197 630 A1**
(43) Date of publication of application: **21.06.2023**
(21) Application number: 21215560.0
(22) Date of filing: 17.12.2021
(51) Int. Cl.: B01J 20/28, B01J 20/286, B01J 20/30, B29C 64/10, B33Y 10/00, B33Y 80/00, B01J 35/04, B01J 37/00, B01D 15/22, G01N 30/60

(54) **AN OBJECT FOR SEPARATION AND/OR CONVERSION OF A SUBSTANCE FROM A LIQUID, AND A METHOD OF MANUFACTURING THEREOF**

(71) Applicant: VITO NV, 2400 Mol (BE)
(72) Inventor: LEFEVERE, Jasper, B-2400 Mol (BE); MICHIELSEN, Bart, B-2400 Mol (BE); DE VOS, Yoran, B-2400 Mol (BE); VOGELSANG SUAREZ, David, B-2400 Mol (BE)
(74) Representative: V.O.

(57) **Abstract**

The invention relates to additive manufacturing an object for separation and/or conversion of a substance from a liquid by guiding the liquid therethrough. A build material is printed in a predetermined arrangement in order to form a three-dimensional monolith structure. The build material includes an active/activated material configured to interact with the liquid. The three-dimensional monolith structure is printed to define an inlet, an outlet and a plurality of flow channels arranged between the inlet and the outlet of the structure, wherein the plurality of flow channels define meandering flow paths between the inlet and the outlet, wherein at least one mixing region is provided within the structure, wherein the at least one mixing region is in fluid connection with at least a set of the plurality of flow channels such as to allow mixing of the liquid guided through said set of the plurality of flow channels.

## Description

### FIELD OF THE INVENTION

The invention relates to a method of manufacturing an object for separation and/or conversion of a substance from a liquid by guiding the liquid therethrough. Furthermore, the invention relates to a three-dimensionally printed object for separation and/or conversion of a substance from a liquid by guiding the liquid therethrough, wherein the object includes a three-dimensional monolith structure having a predetermined arrangement of a build material. The invention also relates to a method for removing, separating or converting a substance from a liquid stream. Additionally, the invention relates to a system for manufacturing the object and a computer program product.

### BACKGROUND TO THE INVENTION

Monolith structures can be used for the separation and/or conversion of a substance from a liquid by guiding the liquid therethrough. Typically, the build material includes an active material and/or a support material which is convertible into an active material. The active material and/or activated support material is configured to interact with the liquid passing through the monolith structure. In some examples, the monolith structure comprises sorbent material. Various active materials can be used. By bringing the liquid in close contact with the active or activated material of the monolith structure, a separation and/or conversion of a substance from a liquid can be achieved.

For example, the monolith object can be used as a chromatography column in chromatography. Chromatography is a widely used separation technique well known in the art. Monolith structures can also be used in other areas of substance separation/conversion, such as, for example, in a catalysis process. Adsorptive processes and devices are widely used for example in the analysis and purification of chemicals.

Conventional techniques may require packing of beads into a column. The quality of this packing determines the performance of the adsorbing bed. This adds another source of variability to the chromatographic process and must be validated before use. Furthermore, beds packed with beads are prone to voiding, a phenomenon whereby the beads settle into a denser structure resulting in the creation of voids and in non-homogeneities in the packing density of the bed, all of which results in a deterioration of performance.

It is known to use 3D-pinted porous monolith structures for separation, chromatography and liquid phase catalysis. However, there is a strong desire to improve the performance of such structures. There is a strong need for increasing the efficiency of such monolith structures, preferably whilst keeping the monolith as compact as possible.

### SUMMARY OF THE INVENTION

It is an object of the invention to provide for a method and a system that obviates at least one of the above mentioned drawbacks.

Additionally or alternatively, it is an object of the invention to provide for an improved method of manufacturing an object for separation and/or conversion of a substance from a liquid by guiding the liquid therethrough.

Additionally or alternatively, it is an object of the invention to provide for an object configured for separation and/or conversion of a substance from a liquid by guiding the liquid therethrough resulting in higher efficiency for a same volume of liquid passed therethrough.

Additionally or alternatively, it is an object of the invention to provide for a more compact design for an object configured for separation and/or conversion of a substance from a liquid by guiding the liquid therethrough.

Thereto, the invention provides for a method of manufacturing an object for separation and/or conversion of a substance from a liquid by guiding the liquid therethrough, wherein the object is manufactured by means of additive manufacturing involving printing a build material in a predetermined arrangement in order to form a three-dimensional monolith structure, wherein the build material includes an active material and/or a support material which is convertible into an active material, and wherein the active material and/or activated support material is configured to interact with the liquid, and wherein the three-dimensional monolith structure is printed to define an inlet, an outlet and a plurality of flow channels arranged between the inlet and the outlet of the structure, wherein the plurality of flow channels define meandering flow paths between the inlet and the outlet, wherein at least one mixing region is provided within the structure, wherein the at least one mixing region is in fluid connection with at least a set of the plurality of flow channels such as to allow mixing of the liquid guided through said set of the plurality of flow channels.

Advantageously, a uniform flow velocity of the liquid can be obtained, whilst enabling adequate mixing of the flow between multiple channels by means of the mixing regions. The enhanced mixing and uniform flow of the liquid obtained by the arrangement of the monolith structure, results in an improved efficiency for separation and/or conversion of at least one substance from the liquid by guiding the liquid through the monolith structure. The liquid can have a substantially similar or same contact time within the monolith structure, whilst having an suitable mixing by means of the at least one mixing region within the monolith structure. Advantageously, this can be achieved with a compact design of the object and/or an increased separation resolution due to increased pathlength for a same volume. This can also result in a more cost-effective solution, as the object is obtained by additive manufacturing (cf. 3D printing).

The monolith object provides for a significantly improved interaction between the liquid and at least a portion of the material that makes up the monolith object. The flow through the monolith structure facilitates an enhanced separation and/or conversion of one or more substances in a liquid by guiding said liquid through the monolith object. The arrangement of the monolith object may be of key importance for the governing flow behavior of the liquid that is guided through the monolith object. Advantageously, the average fluid velocity along the formed flow channel can be made more constant, whilst providing a sufficient mixing of the flow of liquid guided through the monolith structure. A more uniform flow can be obtained. The plurality of flow channels may have a same or similar path, resulting in improved uniformity of the flow, thereby providing a more uniform interaction between the liquid and the material of the object.

By reducing the variation in flow velocity of the liquid flowing between the inlet and the outlet of the monolith object, along the plurality of flow channels, a more uniform treatment of the liquid and/or interaction between the liquid and the material of the object can be obtained. In this way, it can be avoided that certain parts of the monolith object are less active, thereby improving the efficiency per unit volume of the object.

An object with a single flow channel along a meandering path may have various disadvantages. For example, it can be difficult to clean out. For example, if a blockage occurs (e.g. due to reactions, clogging, particle accumulation, and/or bad printing), then a large portion or even the entire monolith structure may be rendered useless. By performing the method according to the disclosure, a monolith structure with increased reliability can be obtained. Moreover, the object may be less sensitive to printing errors (more reliable). For example, if there is a printing error during printing, and a channel of the multiple channels is blocked, then the monolith structure can remain usable, and only a limited portion becomes non-functional (until the mixing region is reached within the monolith structure). The number of flow channels may depend on the size of the object and the application.

The flow of liquid may have a higher velocity in the plurality of channels within the monolith structure than the flow velocity at the inlet. The pathlength within the monolith structure can be significantly increased, whilst providing a balance between uniform flow velocities and mixing.

Advantageously, more narrow separation bands due to the more uniform velocity pattern can be obtained. A narrower separation band can result in improved separation by means of the monolith structure. It is possible to achieve faster separation. Additionally or alternatively, a better quality of separation and/or a faster process may be achieved.

Optionally, the at least one mixing region forms a space within the structure, and wherein each of the set of the plurality of flow channels leads to the space.

The monolith structure may have separated flow channels. However, at the at least one mixing region, mixing of the liquid from said separated flow channels can occur. In some advantageous examples, the mixing region is arranged at the bends or turns of the meandering flow paths (cf. intermediate region from one level to another level). In this way, an improved mixing can be obtained whilst providing for a compact design. The separated flow channels may be in fluid communication with a common slit for example, the slit providing adequate and effective mixing in a relatively compact area.

Optionally, the set of the plurality of flow channels leading to the at least one mixing region are configured to provide a substantially same pressure drop when a liquid is passed therethrough.

In some examples, the flow channels arranged next to each other seen in the flow direction have a same pressure drop over a portion between the inlet and a mixing region, portions between two mixing regions, and/or between a portion between a mixing region and the outlet. The liquid may have a substantially same velocity when reaching the mixing region. It will be appreciated that the pressure drop over a part of the structure (e.g. in one layer or in one section of the monolith structure) may be the same, not necessarily the entire structure. For example, the pressure drop may be the same between two successive mixing regions (e.g. slits).

The pressure drop may be the result of the particular arrangement or configuration. For example, the path, bends, length, dimensions, etc. have an effect on the obtained pressure drop.

Optionally, the at least one mixing region is provided at or approximate to at least one bend in the meandering flow paths.

The monolith structure has a plurality of flow channels following a meandering path between the inlet and the outlet. In this way, an increased flow path length can be obtained between said input and output. This can enable a compact design with an adequate efficiency for separation and/or conversion of a substance from the liquid guided through the monolith structure. The plurality of channels may be arranged in multiple levels, wherein a next level is reached through a bend in the meandering path of the flow channels.

The turn in the flow paths of the plurality of flow channels may influence the flow profile. Advantageously, the mixing regions may be arranged at these turning points (cf. bends in the meandering paths).

Optionally, a plurality of mixing regions are provided within the structure, wherein at least two mixing regions are encountered along the meandering flow path from the inlet to the outlet.

A more uniform flow may be obtained with adequate mixing. For example, zones with significantly lower flow velocity and/or stagnant flow zones may be reduced. Advantageously, this also reduces the risk of having non-uniform flow-material interactions throughout the interior of the monolith object.

Optionally, mixing regions are provided at or approximate to each bend in the meandering paths of the plurality of flow channels.

This can be an advantageous location for arranging the at least one mixing region. In this way, efficient mixing can be provided while providing for a uniform and homogenous flow with increased path length throughout the monolith structure.

Optionally, the mixing regions are slits common for the set of the plurality of flow channels, the slits providing a fluid connection between the set of the plurality of flow channels.

The slit does not need to extend over all the flow channels arranged next to each other seen in the flow direction. Optionally, at some point all the flow channels are in fluid communication with each other through at least one mixing region (e.g. one or more slits).

The mixing regions may provide effective mixing of liquid from a subset of flow channels. For example, the subset of flow channels may be arranged next to each other seen in the flow direction. In some examples, said subset of flow channels are neighboring parallel flow channels. In some examples, the mixing region is defined by a common slit to which the subset of flow channels are connected (cf. fluid communication).

Optionally, at least a set of the slits extend along an entire width connecting all of the plurality of flow channels arranged next to each other in the structure.

In some parts or regions within the monolith structure, at least a set of the channels can come together. In some examples, instead of having a mixing region where the liquid flow from all the flow channels can mix, it is possible that only a subset of the flow channels lead to the mixing region. For example, multiple mixing regions may be arranged at different locations within the interior space of the monolith structure. For example, a region of the monolith structure has 8 channels in total, a subset of 4 channels next to each other may be connected to a mixing region for enabling mixing of liquid coming from the respective 4 flow channels. Some flow channels may be grouped together, allowing mixing of liquid flowing from said grouped subset of flow channels. Various arrangements are possible.

Optionally, the at least one mixing region has upstream flow channels and downstream flow channels connected thereto, wherein the number of upstream flow channels and the number of downstream flow channels are different.

Some portions of the monolith structure may have different channel configurations (e.g. number of channels, size of channels, path of the channels, etc.).

Optionally, the structure has a cuboid shape and the plurality of flow channels have a substantially rectangular cross section.

It will be appreciated that the rectangular cross-sectional shape may have one or more rounded portions, for instance obtained as a result of the additive manufacturing process.

By employing a structure with an enclosing body (cf. shell body) with a rectangular internal cross-section, an interior space can be formed having a rectangular cross-section. Such an enclosing body with multiple rectangular plates in the longitudinal direction, can result in a flow channel with a rectangular cross-section along substantially its entire length. Due to the rectangular cross section along substantially the entire length of the flow channel, the liquid can flow along the formed plurality of flow channels with little or no disturbance of the flow, which can result in less flow velocity differences, such that less stagnation occurs of the liquid. Hence, a more uniform flow can be achieved, thereby providing a higher efficiency for separation and/or conversion of a substance from the liquid.

It will be appreciated that the cross-section of the flow channel along its length may be taken substantially normal to the direction of the flow.

Optionally, the object comprises a first portion for having a first active material, and a second portion for having a second active material, the first and second active materials having different properties, and wherein the first and second portions have different arrangements of flow channels. A beneficial flow can be obtained even in a multi-active material object.

Optionally, the first and second active materials require a different interaction time with the liquid.

Optionally, the active material is adapted for use in at least one of a catalysis process or a chromatography process.

The object can for example be used for chromatographic separation of compounds (e.g. (metal) ions, chemicals or biomolecules). In some examples, the object is used for analytic chromatography or liquid phase catalysis. Advantageously, more controlled reaction conditions can be obtained for catalysis using the object according to the disclosure.

Additionally or alternatively, for heat exchange applications, more surface area at a same flow of liquid can be obtained using the object according to the disclosure.

The material properties of object (e.g. micro-pores, active material, activatable support material, etc.) depends on the application. For example, for chromatography and catalysis processes, the material may have pores for surface functionalization. For heat exchange processes, dense materials may be used.

Various materials and object dimensions may be employed, depending on the application and conditions of use (e.g. flow rate provided at the inlet, type of liquid, etc.). In some examples, for chromatography processes, the material may have a substantially uniform porosity. In some examples, for catalysis processes, the material may have a non-uniform porosity.

Optionally, the structure is printed by means of at least one of: filament deposition, micro-extrusion, stereolithography or digital light processing.

Various 3D printing techniques or additive manufacturing techniques may be used for producing the object with monolith structure.

Optionally, the flow channels defined within the monolith object follow a zig-zag path. The zig-zag path may be rounded for example.

Optionally, the cross-sections of the plurality of flow channels along their length may be non-circular and/or substantially free of convex, concave and/or curved regions.

The rectangular cross-section may remain rectangular. It will be appreciated that a square shape is also considered as a rectangular shape.

The cross-section of the flow channels along their length (i.e. longitudinal) may be of significant importance for the governing flow behavior of the liquid that is guided through the monolith object. Advantageously, the average fluid velocity along the formed flow channel can be made more constant. A more uniform flow can be obtained. Moreover, the flow channels may have a same or similar path, resulting in improved uniformity of the flow, thereby providing a more uniform interaction between the liquid and the material of the object.

The flow velocity differences within the monolith object may be reduced by means of the rectangular cross-sectional shape of the flow channel along its length.

According to an aspect, the invention provides for a method for treating a liquid, including the steps of: providing a 3D printed monolith structure according to the disclosure; providing to be treated liquid to the inlet, allowing the fluid to flow along the plurality of flow channels; and extracting the treated liquid at the outlet.

Optionally, the cross sectional area of the plurality of channels may vary along its length (e.g. for different levels of channels in the monolith structure).

Multiple levels/layers may be printed on top of each other. The levels may be repeated one after the other to the desired height of the monolith structure. In this example, the forth level corresponds to the second layer. In some processes, the levels may correspond to one layer (e.g. filament deposition technique by means of micro-extrusion). However, for some 3D printing techniques, each layer may involve printing multiple layers on top of each other.

According to an aspect, the invention provides for a three-dimensionally printed object for separation and/or conversion of a substance from a liquid by guiding the liquid therethrough, wherein the object includes a three-dimensional monolith structure having a predetermined arrangement of a build material, wherein the build material includes an active material and/or a support material which is convertible into an active material, and wherein the active material and/or activated support material is configured to interact with the liquid, and wherein the three-dimensional monolith structure is arranged to define an inlet, an outlet and a plurality of flow channels arranged between the inlet and the outlet of the structure, wherein the plurality of flow channels are configured to define meandering flow paths between the inlet and the outlet, wherein at least one mixing region is arranged within the structure, and wherein the at least one mixing region is in fluid connection with at least a set of the plurality of flow channels such as to allow mixing of the liquid guided through said set of the plurality of flow channels.

The plurality of flow channels can result in the formation of a more homogeneous flow of the liquid. The geometric structure of the cross-section of the flow channels can be preserved along its length, resulting in a more continuous flow. Advantageously, a more uniform interaction between the structure and the liquid being guided through the interior space of the object can be obtained. Furthermore, an adequate mixing of the flow can be obtained by means of the at least one mixing region.

The plurality of flow channels (e.g. arranged next to each other seen in the flow direction) may be dimensioned and/or configured to have a same pressure drop. In some examples these plurality of flow channels have a same length and/or a same amount of bends, wherein the bends have the same bend angle (cf. curvature). It will be appreciated that various configurations are envisaged. Even a maze-like structure, for instance designed using a computer program product (e.g. optimization software) can be used.

Optionally, the three-dimensionally printed monolith object is configured for treatment of a fluid guided therethrough. The treatment may for instance involve separation and/or conversion of one or more substances from a liquid by guiding said liquid through the monolith object.

Optionally, the three-dimensional monolith structure is configured to allow liquid flow therethrough such as to facilitate interaction between the liquid and one or more (interior) surfaces of the monolith object.

Optionally, the plurality of flow channels have a consistent cross-sectional shape along their length. A meaningful correspondence between the cross-sections of the flow channels along their length may be provided. The shapes of the cross-sections of the flow channels along their length may have explicit properties in common. For instance, a square can remain a square or a rectangular, and a rectangular can remain a rectangular or a square, even where the flow channels bend around a free end of a plate. Additionally or alternatively, the flow channels may have similar or same bends. The generic geometry of the cross-section of the flow channels may remain the same along their length (i.e. rectangular, square). An advantageous flow can be obtained in the formed flow channel by means of the enforced geometric consistency. By means of the rectangular configuration, it may be easier to obtain a consistent cross-sectional shape of the flow channel along its length. The geometric relation between the cross-sections of the flow channel along its length may be preserved. There can exist a geometrical consistent match between the cross-sections of the flow channel along its length. The cross-sections may have matching features such as to have a high level of geometrical consistency. In some examples, the cross-sections may be free of design deformations, such as a transformation of a straight line to a curved side. In some examples, at least the periphery of the cross-section may have a (undeformed) consistent shape.

In some cases, an inconsistent shapes of flow channels may adversely affect, deteriorate or even result in dead flows within the monolith object. This turns out to be of significant importance in dealing with flow channels having a curved path. A more uniform flow velocity can be obtained while the flow channel can follow a meandering path. Additionally, sufficient mixing can be provided by the at least one mixing region. The liquid can be guided through the monolith structure without suffering from undesirable stagnation and/or significant differences in flow velocity in parallel channels. Along the length of the flow channels, the shapes of the cross-sections may have different sizes but geometrically/visually similar to one another, i.e. both rectangular. However, in some examples, the cross-sections may also have substantially the same size.

Optionally, the cross-sectional profile of the flow channel along its length is continuous. Some variations in flow channel cross-section may be possible, but discontinuous shape variations may be avoided in some examples.

According to an aspect, the invention provides for a method for removing, separating or converting a substance from a liquid stream, wherein the monolithic object obtained by performing the method according to the disclosure is contacted with the liquid stream resulting in the adsorption of a portion of the substance in said fluid mixture and, thereby, reducing the amount of the substance in the fluid mixture, wherein the fluid mixture stream is at least partially guided through the structure of the object from the inlet to the outlet.

According to an aspect, the invention provides for a method of manufacturing an object configured to separate and/or convert a substance from a liquid by guiding the liquid therethrough, wherein the object is produced by printing build material in a predetermined arrangement to form a three-dimensional monolith structure, the build material comprising an active material or a support material convertible to an active material, wherein the active material is configured to interact with the liquid, wherein the three-dimensional monolith structure is printed such as to include: an enclosing body configured to enclose an interior space within the monolith structure; a plurality of successive spaced plate structures within the interior space, the plate structures extending inwardly from the enclosing body; an inlet through which the liquid is allowed to enter the interior space; and an outlet through which the liquid is allowed to exit the interior space; wherein the successive plate structures are arranged such as to form a flow channel extending between the inlet and the outlet, wherein the plate structures are positioned in a staggered formation with respect to one another in a longitudinal direction of the enclosing body, such that the flow channel meanders along the plurality of successive spaced plate structures through the interior space; and wherein the flow channel is subdivided into a plurality of channels by means of separation walls, wherein the plurality of parallel channels have a same path length from the inlet to the outlet.

Optionally, cutouts are provided in the successive spaced plate structures such as to allow fluid flowing along a previous plate structure to reach a next plate structure, wherein the cutouts form at least one slit in each of the successive spaced plate structures.

Optionally, the plate structures are provided with at least two slits arranged approximate each other at an end portion thereof.

Optionally, the at least two slits are parallel with respect to each other.

Optionally, the plurality of parallel channels extend along parallel paths having a same curvature.

Optionally, the slits at each plate structure form in a range of 0.1 to 20 percent of a total longitudinal length of said plate structure, preferably in a range of 2-10 percent.

Optionally, at least one slit extends along a complete width of the plate structure.

Optionally, the object comprises a first portion manufactured by printing a first build material, and a second portion manufactured by printing a second build material, the first and second build materials having different properties, wherein successive plate structures in the first portion are positioned at a first pitch distance, and the successive plate structures in the second portion are positioned at a second pitch distance, the first pitch distance being smaller than the second pitch distance.

Optionally, the first and second build material comprise a first and second active material, respectively, wherein the first active material requires a smaller interaction time with the fluid mixture relative to the second active material.

Optionally, the cross-section of the flow channel along its length is non-circular.

Optionally, the build material is adapted for use in at least one of a catalysis process or a chromatography process.

Optionally, the structure is printed by means of at least one of: filament deposition, micro-extrusion, stereolithography or digital light processing.

Optionally, an opening window is defined between a free end of plate structures and a wall of the enclosing body.

Optionally, a member extends from the wall of the enclosing body towards the plates such as to form one or more elongated slits. A plurality of slits may be provided on a same level. For instance, two or more successive slits may be provided in a longitudinal direction of the plate structure. However, additionally or alternatively, it is also possible to arrange one or more plate structures next to other.

Optionally, the plate structures are regularly spaced within the interior space of the enclosing body.

Optionally, the enclosing body has a rectangular cuboid shape.

Optionally, the plurality of flow channel have a substantially rectangular cross-sectional shape along its length.

Optionally, the plate structures are positioned such that the flow channel(s) meander(s), e.g. in a (rounded) zig-zag pattern, through the interior space.

Optionally, the plate structures may be inwardly extending from the shell body, wherein at a free end an opening window is formed allowing the flow of liquid to reach the next plate structure. A meandering flow path may be formed along the plurality of plate structures.

The plate structures may be relatively staggered with respect to each other. Such a staggered configuration define a meandering channel, which can be subdivided in multiple channels separated by walls. The plate structures may be arranged alternatingly, resulting in a desired meandering path which can increase the path length of the flow of liquid within the monolith object. Due to the relatively staggered plate structures, the flow of liquid may be guided along a zig-zag path enhancing the interaction of the liquid and the material of the monolith object. The plurality of plate structures may divide the interior space in several floors or levels with an opening window alternatingly formed at opposite sides of the body or enclosure of the object. The plate structures may also act as structural support plates, improving the stiffness of the monolith structure. In some examples, the plate structures may form transverse plates in the longitudinal direction between the inlet and the outlet of the device.

Optionally, the enclosing body (e.g. shell body) and plat structures are arranged such that a cross-sectional area of the plurality of flow channel remains geometrically similar. In this way, a substantially uniform velocity of the liquid through the flow channel can be obtained. Advantageously, a more uniform fluid velocity over the plate structures can be obtained.

According to an aspect, the invention provides for a three-dimensionally printed object for separating and/or conversion of a substance from a liquid by guiding the fluid mixture therethrough, wherein the object includes a three-dimensional monolith structure made out of a build material printed in a predetermined arrangement, the build material comprising an active material configured to interact with the fluid mixture, wherein the three-dimensional monolith structure comprises: an enclosing body configured to enclose an interior space within the monolith structure; a plurality of successive spaced plate structures within the interior space, the plate structures extending inwardly from the enclosing body; an inlet through which the fluid is allowed to enter the interior space; and an outlet through which the fluid is allowed to exit the interior space; wherein the successive plate structures are arranged such as to form a flow channel extending between the inlet and the outlet, and wherein the plate structures are positioned in a staggered formation with respect to one another in a longitudinal direction of the enclosing body, such that the flow channel meanders along the plurality of successive spaced plate structures through the interior space. Optionally, The plate structures have rectangular shape, and wherein the enclosing body has a rectangular internal cross-section.

Optionally, the flow channel has a substantially constant cross-sectional area along its length.

A flow channel with a uniform cross-section along its length can result in a more steady uniform flow, which can be particularly advantageous for avoiding detrimental effects resulting from non-uniform flow.

It will be appreciated that slight variations in the channel cross-section may be possible, for instance, at turning locations of the flow channel, for instance at or near the opening, slit, cutout or window formed between the free end of the plate structure and the interior surface of the enclosing body.

In some examples, the cross-sections of parallel flow channels may have a substantially constant equivalent hydraulic diameter along its length. Optionally, the flow channels may have a uniform cross-sectional channel, wherein the characteristic length scale represented by hydraulic diameter remains constant along its length and/or along the flow direction.

Advantageously, uneven velocity profiles, back-flows and eddies generated in the flow through the monolith structure can be reduced.

According to an aspect, the invention provides for a three-dimensionally printed object for heat exchange with a fluid by guiding the liquid therethrough, wherein the object includes a three-dimensional monolith structure having a predetermined arrangement of a build material, wherein the build material includes an active material and/or a support material which is convertible into an active material, and wherein the active material and/or activated support material is configured to interact with the liquid, and wherein the three-dimensional monolith structure is arranged to define an inlet, an outlet and a plurality of flow channels arranged between the inlet and the outlet of the structure, wherein the plurality of flow channels are configured to define meandering flow paths between the inlet and the outlet, wherein at least one mixing region is arranged within the structure, and wherein the at least one mixing region is in fluid connection with at least a set of the plurality of flow channels such as to allow mixing of the liquid guided through said set of the plurality of flow channels.

Optionally, the object is at least partially made of a heat exchanging material. For example, the material may be suited to be heated by applying electromagnetic radiation, such as for instance microwave radiation.

Optionally, the object is at least partially made of a magneto-caloric material or thermo-electric material. A magneto-caloric material may cool down when a magnetic field is applied. Advantageously, a compact heat exchange design can be provided, requiring less volume for achieving improved heat transfer.

According to an aspect, the invention provides for a method of manufacturing a three-dimensional monolith object according to the disclosure by means of 3D printing. The monolith object may be configured for enabling separation and/or conversion of a substance from a liquid by guiding the liquid therethrough.

According to an aspect, the invention relates to a use of a three-dimensionally printed monolith object according to the disclosure for at least one of a treatment of a liquid, or a separation and/or conversion of a substance from a liquid by guiding the liquid through the monolith object.

It will be appreciated that the substance may include various components, such as molecules (e.g. biomolecules), chemicals, ions (e.g. metal ions, radio nuclei, etc.), compounds, etc.

Spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if a device in the figures is inverted, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly. Similarly, the terms "upwardly", "downwardly", "vertical", "horizontal" and the like are used herein for the purpose of explanation only unless specifically indicated otherwise.

"Optional" or "optionally" means that the subsequently described event or circumstance may or may not occur, and that the description includes instances where said event or circumstance occurs and instances where it does not.

It will also be understood that the term "and/or" as used herein refers to and encompasses any and all possible combinations of one or more of the associated listed items.

It will be appreciated that any of the aspects, features and options described in view of the method apply equally to the object and the system. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of a monolith structure;
Fig. 2 shows a schematic diagram of an embodiment of a monolith structure;
Fig. 3 shows a schematic diagram of exemplary levels/layers of a monolith structure;
Fig. 4 shows a schematic diagram of exemplary levels/layers of a monolith structure;
Fig. 5 shows a schematic diagram of exemplary levels/layers of a monolith structure;
Fig. 6 shows a schematic diagram of exemplary levels/layers of a monolith structure; and
Fig. 7a, 7b illustrate the pressure drop and flow velocity along the plurality of channels of an exemplary monolith structure respectively.

### DETAILED DESCRIPTION

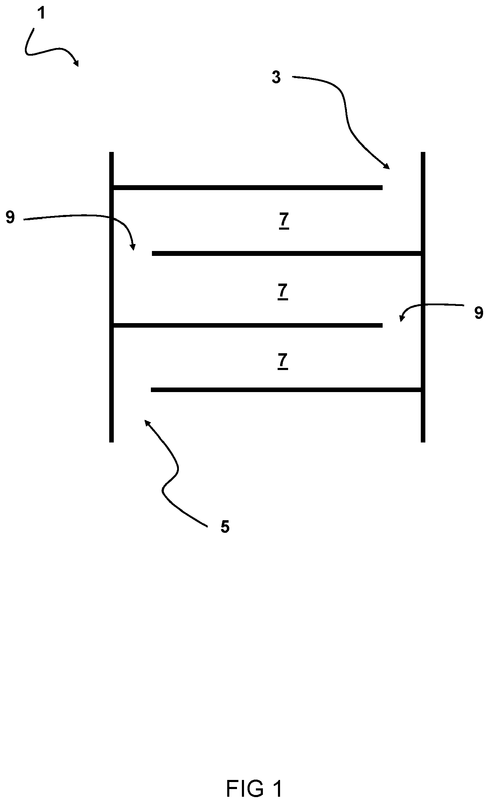

Fig. 1 shows a schematic diagram of a cross sectional view of an embodiment of a monolith structure 1 of a three-dimensionally printed object for separation and/or conversion of a substance from a liquid by guiding the liquid therethrough. The object includes the three-dimensional monolith structure 1 having a predetermined arrangement of a build material. The build material includes an active material and/or a support material which is convertible into an active material. The active material and/or activated support material is configured to interact with the liquid. The three-dimensional monolith structure 1 is arranged to define an inlet 3, an outlet 5 and a plurality of flow channels 7 arranged between the inlet 3 and the outlet 5 of the monolith structure 1. Since a cross sectional side view is shown, only one of the plurality of channels which are arranged next to each other seen in the direction of the flow of liquid is shown. The plurality of flow channels 7 of the monolith structure 1 are configured to define meandering flow paths between the inlet 3 and the outlet 5. The at least one mixing region 9 is arranged within the monolith structure 1. Furthermore, the at least one mixing region 9 is in fluid connection with at least a set of the plurality of flow channels 7 such as to allow mixing of the liquid guided through said set of the plurality of flow channels 7.

In this example, the mixing regions 9 which provide a fluid communication between at least two of the plurality of flow channels is arranged at the bends of the meandering flow paths. In this way, the mixing regions 9 can be arranged at the slits which allow the flow of liquid from one level to a next level (in this exemplary figure, the next level is a lower level). In some examples, depending on the additive manufacturing method, the levels are formed by one or more layers. For example, for micro-extrusion, one level may correspond to one layer (i.e. having a thickness of one filament). However, other arrangements are also envisaged.

The liquid can travel through the plurality of flow channels and mix in the at least one mixing regions. Subsequently, from the at least one mixing region, the liquid can travel further to a next section of plurality of flow channels (e.g. same or different number and/or flow channels with same or different configurations, dimensions, etc.). This process can continue for multiple mixing regions arranged within the monolith structure until the outlet of the monolith structure has been reached.

The meandering flow paths can result in increased pathlength through the monolith structure. A uniform flow velocity can be obtained whilst providing adequate mixing of the liquid in the flow channels. Advantageously, the amount of material per unit volume can be increased. Additionally or alternatively, higher flow velocities and larger contact areas can be obtained.

For example, in case of chromatograph, the separation time can be effectively shortened and a better resolution can be achieved. For example, in some examples, the liquid is guided through the monolith structure, and substances that interact with the material of the monolith structure can be retained in the structure.

In some examples, sections of the plurality of flow channels from the inlet to the first mixing region, between two mixing regions, and/or from a last mixing region to the outlet have a same pathlength. In this way an uniform flow velocity can be achieved along the flow channels. This can be important for various applications involving the separation and/or conversion of a substance from a liquid by guiding the liquid through the monolith object.

The mixing region can provide for a more homogeneous flow. The mixing region can be a slit arranged at bends of the meandering flow paths of the plurality of flow channels.

It will be appreciated that various additive manufacturing processes can be used, for instance micro-extrusion, direct light processing, stereolithography, etc.

Each level has one slit in this example. However, it is also envisaged that a different number of slits are provided, for example two successive slits. Various number of slits and/or slit configurations can be employed. By arranging two or more successive slits, the mixing can be enhanced. Advantageously, the two or more successive slits may result in more turbulence, vortex shedding, etc. at the mixing area.

At least a subset of the plurality of flow channels may have a common mixing region (e.g. slit). For example, one or more slits may be provided which are common for at least two of the plurality of flow channels. With other words, the at least two of the plurality of flow channels may lead to the same mixing region (cf. slit). Various common mixing region (e.g. slit) configurations are possible.

The flow of the liquid follows a (regular) meandering path, here a rounded zig-zag path, through the flow channels with substantially rectangular cross-sections along its length. The flow channel may have a substantially constant cross section. Major flow differences of the liquid can be avoided, such that a more uniform flow can be obtained along the formed flow channels.

Optionally, the monolith structure is usable in at least one of a catalysis process, a chromatography process, or a heat transfer process.

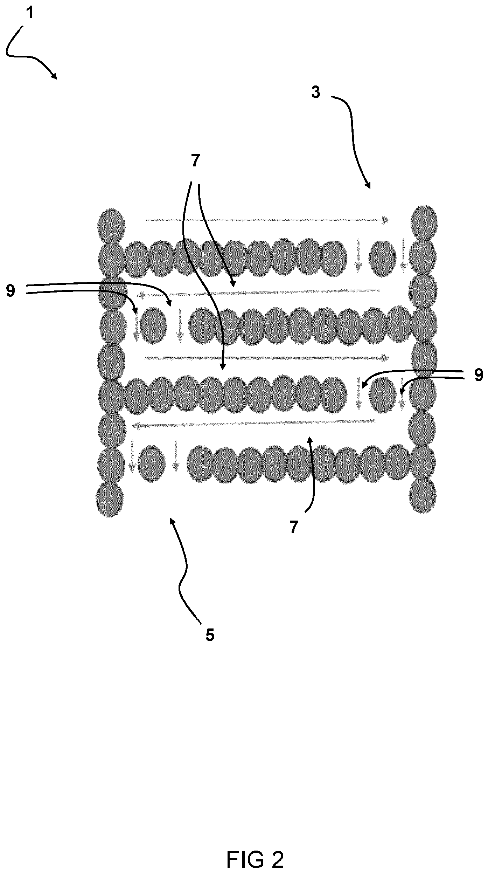

Fig. 2 shows a schematic diagram of a cross sectional view of an embodiment of a monolith structure 1. A direction of the flow of liquid is illustrated by means of straight arrows in this exemplary figure. Furthermore, the build material has been 3D printed by means of a micro-extrusion process involving the deposition of filaments of build material (e.g. circular cross section). In this example, monolith structure 1 has two adjacent mixing regions, both arranged at or approximate to the bends in the meandering flow paths. In this example, the mixing regions are advantageously arranged at slits through which the liquid flows from one level to a next level (in this example, from higher levels to lower levels).

The pathlength per volume can be increased in an advantageous way. As a result, a significantly smaller object can be obtained. Such a compact design can result in faster manufacturing processes, thereby providing a more cost-effective solution. Moreover, the object can provide increased efficiency for a same volume.

In some examples, every level of flow channels (cf. substantially straight portions between bends) has a thickness of one filament diameter. However, the height of each level of flow channels may be different. For example, non-porous layers may have a smaller thickness. If it is desired to have multiple components separated/converted from the liquid, for example the monolith structure may be a multi-material object, in some examples, the residence time can be changed by changing the height of the channels.

Optionally, the object has a first material portion and a second material portion, the first and second material portion made of different active/activated materials, wherein the channels are adapted to provide for a lower flow rate for the first material portion (e.g. bad kinetics), and a higher flow rate for the second material portion (e.g. good kinetics).

In some examples, two to ten percent of the length can be a slit opening. In some examples, one slit is arranged. However, it is also possible to arrange multiple slits arranged in proximity to each other. In some examples, the two to ten percent can be subdivided in multiple slits for improving the mixing. Optionally, at least 90% percent of the total length of the plate structures are closed (no slit).

It is possible that one of the slits closes off due to a printing error and/or clogging, and then at least a portion of the monolith structure would be rendered useless. By employing multiple (successive) slits, for example arranged adjacent to each other, this problem can be effectively prevented, whilst providing an improved mixing at the mixing area.

Optionally, the width of an individual flow channel seen in the flow direction is at least four times the height of said individual flow channel, preferably at least 5 times, even more preferably at least 6 times.

In some examples, the geometric structure of the cross-sections of the flow channel along its length may be consistently preserved, such that a correspondence between the outer line elements of the cross sections exists. A complete matching of the shape of the cross-sections may be obtained when scaled in one or two dimensions. A homogeneous shape mutation may be allowed. The shapes of the cross-sections may be a homogeneous representation of a primary shape.

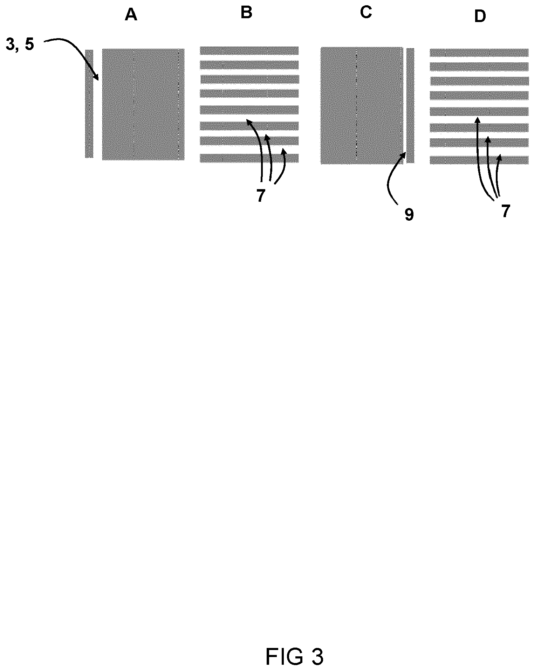

Fig. 3 shows a schematic diagram of a top view of exemplary levels/layers A-D of a monolith structure 1 which are stacked on top of each other during 3D printing for forming the monolith structure 1. Although only four exemplary levels are shown, it is also possible that the monolith structure 1 has a different number of levels. In some examples, the monolith structure 1 has more levels, for instance using the same level configurations are illustrated in this figure. However, the monolith structure 1 may also have different level configurations, other arrangements of levels, etc. In this example, level B and D have a same configuration. These two levels define a plurality of flow channels extending in parallel next to each other. However, a different flow channel configuration is also possible. It is also envisaged that a different number of flow channels are provided in layers B and D. For example, in some examples, layer B and layer D may have a different number of channels next to each other (e.g. wider or smaller channels). Furthermore, layers A and C define slits which act as mixing regions for the plurality of flow channels. In an example, the levels are 3D printed on top of each other, for instance in a configuration A-B-C-D-A. In such an example, the slit in level A acts as an inlet 3 (e.g. top level) and an outlet 5 (e.g. bottom layer) for the monolith structure 1. The slit in layer C acts as a mixing region 9. It will be appreciated that it is also possible that a different level is used for the first and last level (cf. top and bottom) for defining the inlet 3 and the outlet 5 of the monolith structure 1. Various stacking and configurations of levels are possible for 3D printing the object with monolith structure 1.

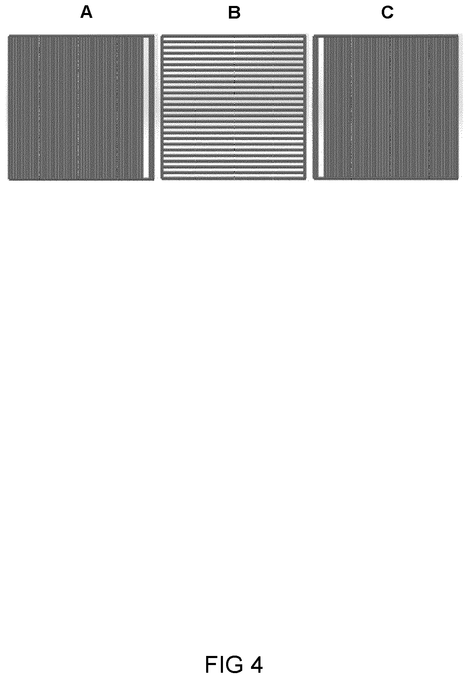

Fig. 4 shows a schematic diagram of a top view of exemplary levels/layers of a monolith structure 1 (similar to fig. 3). Only three levels, namely level A, B and C are shown. The monolith structure 1 may be 3D printed using these 3 layer configurations. For example, level A may correspond to the first and fifth level; level B may correspond to the second and fourth level, and level C may correspond to the third level. Different stacking configurations are also possible. For example, such pattern may be repeated to have a larger stacking of levels. Hence, in this example, the slit shown in layer A or C may be an inlet 3, outlet 5 or mixing region 9, depending on its position in the stacking of levels. Furthermore, layer B used at different parts of the monolith structure may have a different number of channels or flow channels with different paths (e.g. curved paths, periodic paths, sinusoidal paths, etc.).

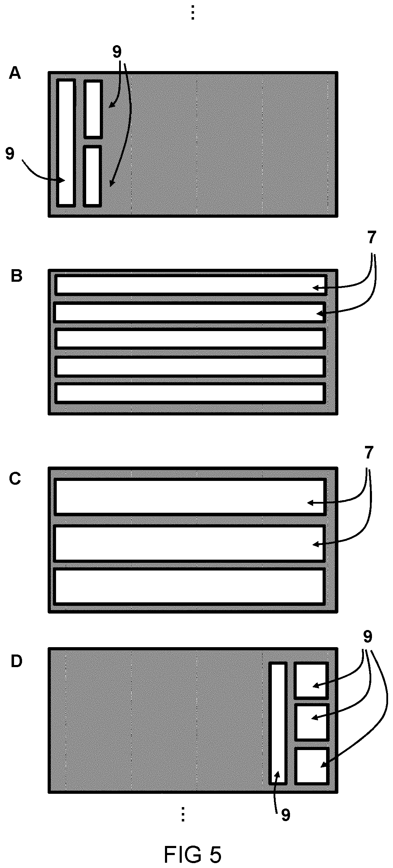

Fig. 5 shows a schematic diagram of a top view of exemplary levels/layers of a monolith structure 1. The shown layers may be a subset of levels used in the stacking of levels for 3D printing the monolith structure 1. With other words, various other levels with different configurations may be employed. In this example, level A defines multiple slits acting as mixing regions 9. These slits provide a fluid communication between multiple flow channels, thereby allowing a mixing of the liquid therein. Furthermore, in this example, level D has a different exemplary configuration of multiple slits. Levels B and C define flow channels 7. Layer B defines five parallel flow channels 7, while channel C defines three wider flow channels 7. Various other channel configurations are envisaged.

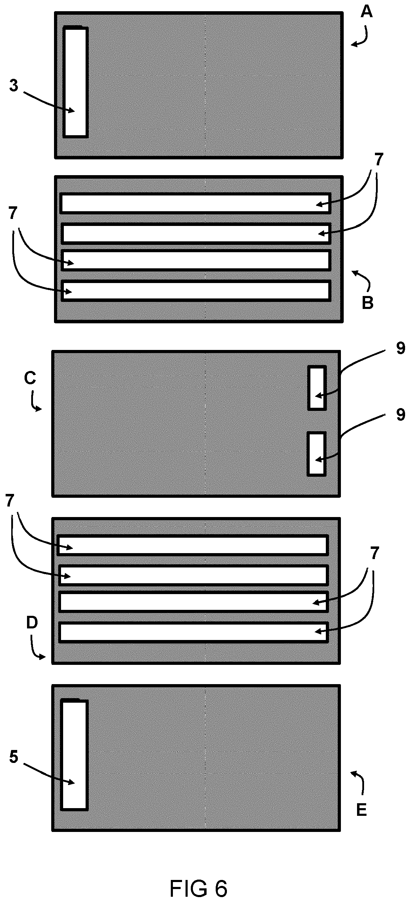

Fig. 6 shows a schematic diagram of a top view of exemplary levels/layers of a monolith structure 1. In this example, the monolith structure 1 is manufactured by 3D printed layers A-E on top of each other (level A at a top portion and level E at a bottom portion). The three-dimensional monolith structure 1 is printed to define an inlet 3, an outlet 5 and a plurality of flow channels 7 arranged between the inlet 3 and the outlet 5 of the structure 1, wherein the plurality of flow channels 7 define meandering flow paths (not shown since only the levels are shown), between the inlet 3 and the outlet 5. At least one mixing region 9 is provided within the structure 1, wherein the at least one mixing region is in fluid connection with at least a set of the plurality of flow channels 7 such as to allow mixing of the liquid guided through said set of the plurality of flow channels. In this example, advantageously, the mixing regions 9 are arranged as slits. The bends in the meandering flow paths occur at these slits.

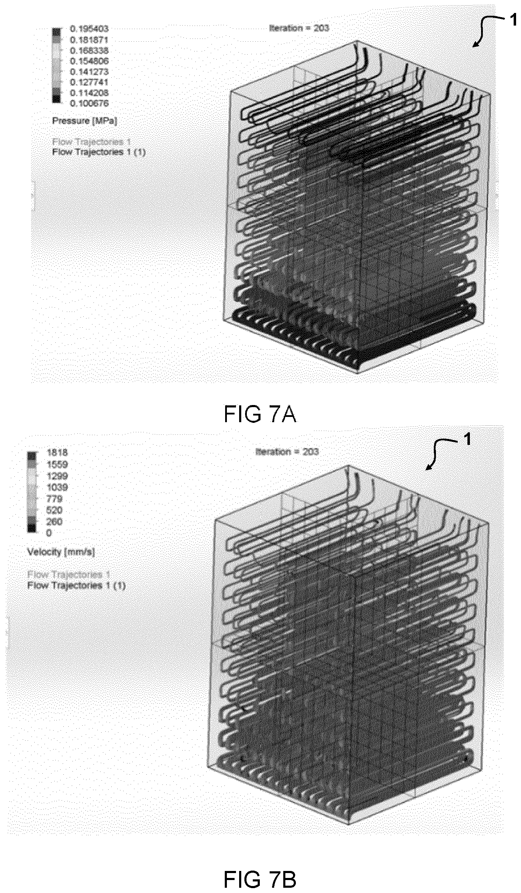

Fig. 7a, 7b illustrate the pressure drop and flow velocity along the plurality of channels of an exemplary monolith structure. The exemplary results are obtained by performing a computational fluid dynamics simulation experiment. Fig. 7a shows the pressure drop along the plurality of flow channels 7 defined by the monolith structure 1. Fig. 7b illustrates the flow velocity in the plurality of flow channels 7. A beneficial mixing is obtained with limited pressure drop over the monolith structure (from inlet to outlet). Moreover, the number of dead zones was limited.

The monolith structure described in this example is a cuboid with a base of 10.8 mm x 10.8 mm and a height of 14.5 mm. The perimeter is made of two fibers of 0.40 mm in each layer. The infill of the structure was designed assuming the use of fibers with a diameter of 0.40 mm. Counting from the bottom to the top, every odd level was arranged as a solid layer with a slot made by leaving out one region (cf. cutout). This can for instance be achieved by leaving out fibers in a micro-extrusion process. However, other 3D printing techniques may also be employed. The even levels/layers were designed with a minimum spacing of 0.20 mm to end with 16 channels. The height of each layer was set as 0.35 mm. Therefore, the system has two openings. The bottom slot was selected as the fluid inlet and the top slot as the fluid outlet. The inlet was selected to have a mass flow rate of 0.001 kg/s of water assuming a uniform velocity profile and a turbulent boundary layer. On the other hand, the outlet was assumed to be under atmospheric pressure or 101325 MPa. Isothermal conditions were also assumed at 20 °C. A basic mesh of 0.38 mm was generated automatically and refined by a computational fluid dynamics solver.

Advantageously, the required volume of the object can be significantly reduced. The pathlengths are effectively increased whilst providing for beneficial flow characteristics and adequate mixing. As a result, the separation/conversion factor per unit volume can be enhanced with respect to known objects.

It will be appreciated that any kind of fluid may be used. For example, instead of a liquid, a gas may be used. In some examples, the fluid is a vapour gas. Optionally, the liquid is a mixture.

The build material used during the additive manufacturing process may comprise an active material. However, it is also possible that a support material is 3D printed and afterwards the support material is functionalized for making it an active material (e.g. coating, impregnation, functionalization). A combination of such techniques may also be used.

The build material may be converted into an active material by means of post-processing. In some examples, at least one part of the object is an active material, and at least another part of the object is a build material which is convertible to an an active material.

It will be appreciated that various chromatography processes may be employed, for example, gel chromatography, ion exchange chromatography, hydrophobic interaction chromatography, reverse phase chromatography, affinity chromatography, immuno-adsorption chromatography, lectin affinity chromatography, ion affinity chromatography and other such well-known chromatographic methods.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any 3, .4, 5, >6 or >7 etc. of said members, and up to all said members.

As used in the description and in the claims, unless otherwise specified, the use of the ordinal adjectives "first", "second", "third", etc., to describe a common element, merely indicate that different instances of like elements are being referred to, and are not intended to imply that the elements so described must be in a given sequence, either temporally, spatially, in ranking, or in any other manner.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A method of manufacturing an object for separation and/or conversion of a substance from a liquid by guiding the liquid therethrough, wherein the object is manufactured by means of additive manufacturing involving printing a build material in a predetermined arrangement in order to form a three-dimensional monolith structure, wherein the build material includes an active material and/or a support material which is convertible into an active material, and wherein the active material and/or activated support material is configured to interact with the liquid, and wherein the three-dimensional monolith structure is printed to define an inlet, an outlet and a plurality of flow channels arranged between the inlet and the outlet of the structure, wherein the plurality of flow channels define meandering flow paths between the inlet and the outlet, wherein at least one mixing region is provided within the structure, wherein the at least one mixing region is in fluid connection with at least a set of the plurality of flow channels such as to allow mixing of the liquid guided through said set of the plurality of flow channels.

2. The method according to claim 1, wherein the at least one mixing region forms a space within the structure, and wherein each of the set of the plurality of flow channels leads to the space.

3. The method according to claim 1 or 2, wherein the set of the plurality of flow channels leading to the at least one mixing region are configured to provide a substantially same pressure drop when a liquid is passed therethrough.

4. The method according to claim 1, 2 or 3, wherein the at least one mixing region is provided at or approximate to at least one bend in the meandering flow paths.

5. The method according to any one of the preceding claims, wherein a plurality of mixing regions are provided within the structure, wherein at least two mixing regions are encountered along the meandering flow path from the inlet to the outlet.

6. The method according to any one of the preceding claims, wherein mixing regions are provided at or approximate to each bend in the meandering paths of the plurality of flow channels.

7. The method according to any one of the preceding claims, wherein the mixing regions are slits common for the set of the plurality of flow channels, the slits providing a fluid connection between the set of the plurality of flow channels.

8. The method according to claim 7, wherein at least a set of the slits extend along an entire width connecting all of the plurality of flow channels arranged next to each other in the structure.

9. The method according to any one of the preceding claims, wherein the at least one mixing region has upstream flow channels and downstream flow channels connected thereto, wherein the number of upstream flow channels and the number of downstream flow channels are different.

10. The method according to any one of the preceding claims, wherein the structure has a cuboid shape and the plurality of flow channels have a substantially rectangular cross section.

11. The method according to any one of the preceding claims, wherein the object comprises a first portion for having a first active material, and a second portion for having a second active material, the first and second active materials having different properties, and wherein the first and second portions have different arrangements of flow channels.

12. The method according to claim 11, wherein the first and second active materials require a different interaction time with the liquid.

13. The method according to any one of the preceding claims, wherein the active material is adapted for use in at least one of a catalysis process or a chromatography process.

14. The method according to any one of the preceding claims, wherein the structure is printed by means of at least one of: filament deposition, micro-extrusion, stereolithography or digital light processing.

15. A three-dimensionally printed object for separation and/or conversion of a substance from a liquid by guiding the liquid therethrough, wherein the object includes a three-dimensional monolith structure having a predetermined arrangement of a build material, wherein the build material includes an active material and/or a support material which is convertible into an active material, and wherein the active material and/or activated support material is configured to interact with the liquid, and wherein the three-dimensional monolith structure is arranged to define an inlet, an outlet and a plurality of flow channels arranged between the inlet and the outlet of the structure, wherein the plurality of flow channels are configured to define meandering flow paths between the inlet and the outlet, wherein at least one mixing region is arranged within the structure, and wherein the at least one mixing region is in fluid connection with at least a set of the plurality of flow channels such as to allow mixing of the liquid guided through said set of the plurality of flow channels.
